Europäisches Patentamt

European Patent Office

Office européen des brevets

(11) Publication number: **0 408 103 A1**

# EUROPEAN PATENT APPLICATION

(21) Application number: 90201721.9

(22) Date of filing: 28.06.90

(51) Int. Cl.5: **H01M 8/02, H01M 4/86**

(30) Priority: **12.07.89 NL 8901798**

(43) Date of publication of application:
**16.01.91 Bulletin 91/03**

(84) Designated Contracting States:
**AT BE CH DE DK ES FR GB GR IT LI LU NL SE**

(71) Applicant: **Stichting Energieonderzoek Centrum Nederland(ECN)**
**Westerduinweg 3**
**NL-1755 LE Petten(NL)**

(72) Inventor: **Quaadvliet, Henricus Johannes Adrianus**
**Plevierweg 58**
**NL-1873 HT Groet(NL)**

(74) Representative: **de Bruijn, Leendert C. et al**
**Nederlandsch Octrooibureau**
**Scheveningseweg 82 P.O. Box 29720**
**NL-2502 LS 's-Gravenhage(NL)**

(54) Electrode for use in a gas fuel cell which contains a set of electrodes.

(57) Electrode for use in a gas fuel cell into which a reactant gas is passed in order to generate electrical energy, the electrode being provided with a virtually flat catalyst for ionizing the gas, a current collector which is arranged in direct contact with, and in electrical contact with, a flat surface of said catalyst in order to convey the current which is produced by the ionization of the reactant gas, said current collector (8) being provided with a number of linear ribs which form alternatingly open and closed channels along the flat surface of the catalyst through which the reactant gas can be passed wherein in the sections of the supporting plate (8) are offset with respect to one another by half a pitch length in the transverse direction, and which electrode is provided with inlets and outlets (13, 14) for reactant gas and oxidizing gas.

fig-2

EP 0 408 103 A1

## ELECTRODE FOR USE IN A GAS FUEL CELL WHICH CONTAINS A SET OF ELECTRODES

The invention relates to an electrode for use in a gas fuel cell into which a reactant gas is passed in order to generate electrical energy, the electrode being provided with a virtually flat catalyst for ionizing the gas, a current collector which is arranged in direct contact with, and in electrical contact with, a flat surface of said catalyst in order to convey the current which is produced by the ionization of the reactant gas, said current collector being provided with a number of linear ribs which form alternatingly open and closed channels along the flat surface of the catalyst through which the reactant gas can be passed, and which electrode is provided with inlets and outlets for reactant gas and oxidizing gas, the supporting plate, provided with ribs, being composed of more than one part, the parts being offset with respect to one another so that the gas flow channels are not completely in line with one another, and also to a cell which is composed of a set of such electrodes.

Such an electrode is disclosed in the US Patent Specification 4,548,876, in which the parts of the supporting plate provided with ribs are somewhat offset with respect to one another. The purpose of this offset is to achieve an improvement in the gas diffusion.

More generally, fuel cells are known for generating energy by electrochemical combustion of hydrogen. The advantage of this mode of combustion is the direct conversion into electricity, in addition to heat as a consequence of internal resistance in the (fuel) cell. As a result, process efficiencies of 60% and higher can be obtained. Although hydrogen is the fuel component in a fuel cell, it is also possible to use, inter alia, natural gas or coal gas as primary components.

The use of natural gas or coal gas requires conversion into a hydrogen-rich gas mixture by "reforming" or "chemical shift" reactions. These chemical reactions are endothermic and can be catalytically shifted at the working temperature of molten-carbonate fuel cell systems in the normal range of 600 to 700° C.

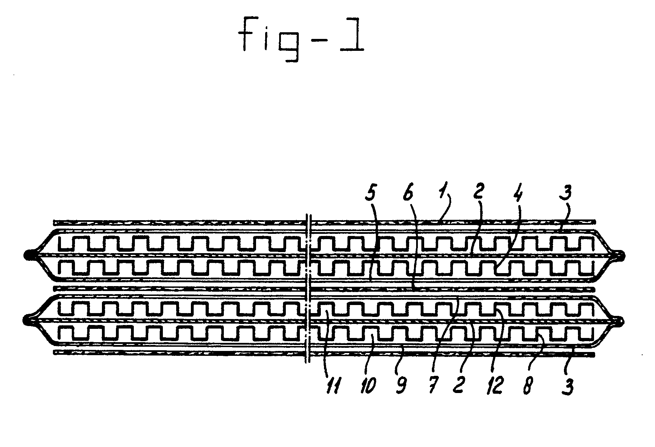

The molten-carbonate fuel cell is composed in principle of a plate-type anode, a matrix containing electrolyte and a cathode. This so-called active assembly of the fuel cell is enclosed on either side between one or more metal plates, termed current conductor and/or separator plate, which has to provide a number of functions such as: supporting the plate-type electrodes, passing the process gases over the electrodes, uniformly distributing the process gases over the electrode surface, conducting electrons between the separate fuel cells and separating the fuel gas and the oxidizing gas between anode and cathode of adjacent fuel cells. Figure 1 shows a basic diagram of a molten-carbonate fuel cell as described above, with the half-cell adjoining at both sides. In this figure, 1 indicates the matrix, 2 is a flat separating plate, 3 is the gas container, 4 is a corrugated plate, 5 is the cathode, 6 is again a matrix, 7 is the anode, 8 is again a corrugated plate, 9 indicates the cathode, while at 10 an oxidizing agent is present and at 11 fuel is present. A cell is then formed by the elements 5, 6 and 7 together with carbonate between the corrugated plates 4 and 12.

The disadvantage of the generally standard electrode is that only half of the process gases are able to reach the electrode surface. In particular, this is a disadvantage for the use of the fuel because this part of the fuel leaves the cell unused.

It is generally known to counteract this drawback by using a perforated folded corrugated plate. However, this is expensive and the material is too much weakened by this use.

Although a weakening appears not to occur in the method according to US Patent Specification 4,547,876, the improved diffusion of the fuel achieved therein is still inadequate.

A device of the type described in the preamble has now been found which is characterized in that the sections of the supporting plate are offset with respect to one another by half a pitch length in the transverse direction.

Preferably, the ribs of the supporting plate are formed rectangularly and, in particular, it is preferable that the supporting and the corrugated plate are composed of more than two sections.

According to an advantageous embodiment, the anode side of the supporting plate is manufactured from nickel or from nickel metal.

According to another advantageous embodiment, the cathode side of the supporting plate is manufactured from stainless steel or from a high-quality nickel alloy.

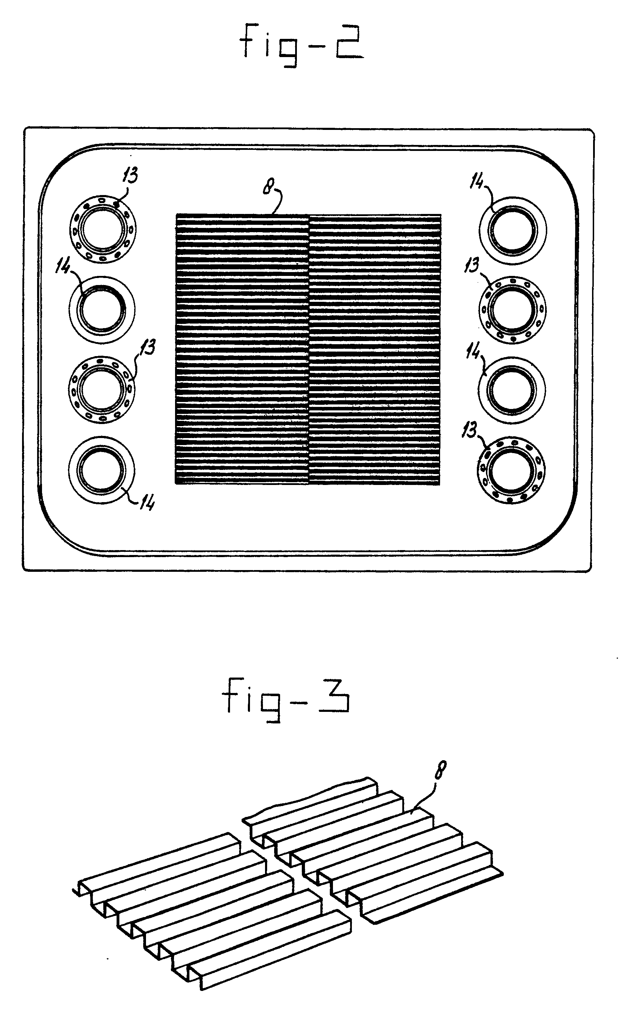

The offset is illustrated in Figures 2 and 3, 13 being the fuel inlet pipes and 14 the oxidizing agent inlet pipes in Figure 2, while 8 indicates the supporting plate. This structure does not have the disadvantages of the known embodiments described above. In the construction according to the invention, after passing through half of the fuel cell in the case of a supporting plate divided into two, the other half of the electrode is brought into contact with the unused process gas. It is pointed out that the electrode can in principle be divided into an arbitrary number of even numbers.

The fuel cell also has a uniform and consequently improved use of fuel. This improvement results, on the one hand, from a uniform temperature variation in the fuel cells and, on the other hand, from an improved use as a result of a higher effective cell voltage at the nominal current per unit area of the cell.

As plate material at the anode side, nickel or a nickel-plated metal is preferably used. As plate material at the cathode side, stainless steel or high-quality nickel steel is preferably used.

## Claims

1. Electrode for use in a gas fuel cell into which a reactant gas is passed in order to generate electrical energy, the electrode being provided with a virtually flat catalyst for ionizing the gas, a current collector which is arranged in direct contact with, and in electrical contact with, a flat surface of said catalyst in order to convey the current which is produced by the ionization of the reactant gas, said current collector being provided with a number of linear ribs which form alternatingly open and closed channels along the flat surface of the catalyst through which the reactant gas can be passed, and which electrode is provided with inlets and outlets for reactant gas and oxidizing gas, the supporting plate, provided with ribs, being composed of more than one part, the parts being offset with respect to one another so that the gas flow channels are not completely in line with one another, characterized in that the sections of the supporting plate are offset with respect to one another by half a pitch length in the transverse direction.

2. Electrode according to Claim 1, characterized in that the ribs of the supporting plate are formed rectangularly.

3. Electrode according to Claim 1, characterized in that the supporting and the corrugated plate are composed of more than two sections.

4. Electrode according to Claims 1 to 3, characterized in that the anode side of the supporting plate is of nickel or of nickel metal.

5. Electrode according to Claims 1 to 4, characterized in that the cathode side of the corrugated plate is manufactured from stainless steel or from a high-quality nickel alloy.

6. Cell, characterized in that it contains one or more electrodes according to Claims 1 - 5.

fig-1

fig-2

fig-3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | JP-A-1 140 560 (HITACHI LTD)(01-06-1989) * Whole document * & PATENT ABSTRACTS OF JAPAN, vol. 13, no. 393 (E-814)[3741], 31st August 1989 | 1,3,6 | H 01 M 8/02<br>H 01 M 4/86 |
| Y | | 2,4,5 | |
| Y | JP-A-6 386 361 (HITACHI LTD)(16-04-1988) * Whole document * & PATENT ABSTRACTS OF JAPAN, vol. 12, no. 320 (E-651)[3167], 30th August 1988 | 2 | |
| Y | PATENT ABSTRACTS OF JAPAN, vol. 10, no. 175 (E-413)[2231], 20th June 1986; & JP-A-61 24 158 (MITSUBISHI DENKI K.K.) 01-02-1986 * Whole document * | 4 | |
| D,Y | US-A-4 548 876 (L.J. BREGOLI) * Figure 1; column 3, lines 49-61 * | 2 | |
| Y | PATENT ABSTRACTS OF JAPAN, vol. 10, no. 317 (E-449)[2373], 28th October 1986; & JP-A-61 128 469 (HITACHI LTD) 16-06-1986 * Whole document * | 2 | |
| Y | EXTENDED ABSTRACTS, vol. 87-1, 1987, pages 65-66, Spring (Meeting), Philadelphia, Pennsylvania, US; H.S. HAU et al.: "Corrosion of Fe-25Cr-20Ni alloy in molten alkali carbonates" * Page 65, left-hand column, paragraph 1 * | 5 | |

-/-

TECHNICAL FIELDS SEARCHED (Int. Cl.5)

H 01 M

The present search report has been drawn up for all claims

| Place of search | Date of completion of the search | Examiner |
|---|---|---|
| THE HAGUE | 27-09-1990 | D'HONDT J.W. |

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | JP-A-1 115 066  (HITACHI LTD)(08-05-1989) * Whole document * & PATENT ABSTRACTS OF JAPAN, vol. 13, no. 354 (E-802)[3702], 8th August 1989 --- | 5 | |
| Y | PATENT ABSTRACTS OF JAPAN, vol. 13, no. 173 (E-748)[3521], 24th April 1989; & JP-A-1 3960 (HITACHI LTD) 09-01-1989 * Whole document * --- | 5 | |
| Y | PATENT ABSTRACTS OF JAPAN, vol. 13, no. 173 (E-748)[3521], 24th April 1989; & JP-A-1 3962 (HITACHI LTD) 09-01-1989 * Whole document * --- | 4,5 | |
| X | PATENT ABSTRACTS OF JAPAN, vol. 11, no. 187 (E-516)[2634], 16th June 1987; & JP-A-62 17 959 (FUJI ELECTRIC CO.) 26-01-1987 * Whole document * ----- | 1,3,6 | TECHNICAL FIELDS SEARCHED (Int. Cl.5) |

The present search report has been drawn up for all claims

| Place of search | Date of completion of the search | Examiner |
|---|---|---|
| THE HAGUE | 27-09-1990 | D'HONDT J.W. |